(19) Europäisches Patentamt
European Patent Office
Office européen des brevets

(11) **EP 4 465 078 A1**

(12) **EUROPEAN PATENT APPLICATION**
published in accordance with Art. 153(4) EPC

(43) Date of publication:
**20.11.2024 Bulletin 2024/47**

(21) Application number: **22926386.8**

(22) Date of filing: **15.02.2022**

(51) International Patent Classification (IPC):
*G01S 7/481* *(2006.01)*

(52) Cooperative Patent Classification (CPC):
**G01S 7/481**

(86) International application number:
**PCT/CN2022/076378**

(87) International publication number:
**WO 2023/155048 (24.08.2023 Gazette 2023/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **WANG, Chao
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **DETECTION APPARATUS, TERMINAL DEVICE AND RESOLUTION REGULATION AND CONTROL METHOD**

(57)    A detection apparatus, a terminal device, and a resolution regulation method are disclosed, which may be applied to the field such as autonomous driving, intelligent driving, or surveying and mapping. The detection apparatus includes a transmitting module. The transmitting module corresponds to M scanning fields of view, and M is an integer greater than 1. Pointing directions of the M scanning fields of view and a splicing manner of the M scanning fields of view are related to a resolution requirement of the detection apparatus. It may also be understood that the pointing directions of the M scanning fields of view and the splicing manner of the M scanning fields of view may be adjusted based on the resolution requirement of the detection apparatus. A pointing direction of at least one of the M scanning fields of view and the splicing manner of the M scanning fields of view are regulated, to flexibly regulate a resolution of the detection apparatus, so that different resolution requirements of the detection apparatus can be met. Further, a size of a full field-of-view range of the detection apparatus may be adjusted by using the pointing directions of the M scanning fields of view and the splicing manner of the M scanning fields of view.

FIG. 2

EP 4 465 078 A1

## Description

### TECHNICAL FIELD

This application relates to the field of detection technologies, and in particular, to a detection apparatus, a terminal device, and a resolution regulation method.

### BACKGROUND

A detection apparatus may sense a surrounding environment, and may identify and track a target based on the sensed environment information. Therefore, the detection apparatus is increasingly widely used, and in particular, the detection apparatus plays an increasingly important role in an intelligent terminal (such as an intelligent transportation device, a vehicle, a smart home device, or a robot).

A resolution is relatively important performance of a detection apparatus. When the detection apparatus is applied to different scenarios, different resolutions may be required. For example, in some possible application scenarios, a relatively high resolution is required for a central region in a full field-of-view range of the detection apparatus. In some other possible application scenarios, different resolutions are required for different regions in the full field-of-view range of the detection apparatus. In other words, a resolution gradient is formed.

In conclusion, how to enable the detection apparatus to meet different resolution requirements is a technical problem that urgently needs to be resolved.

### SUMMARY

This application provides a detection apparatus, a terminal device, and a resolution regulation method, so that the detection apparatus can meet different resolution requirements.

According to a first aspect, this application provides a detection apparatus. The detection apparatus includes a transmitting module. The transmitting module corresponds to M scanning fields of view, and M is an integer greater than 1. Pointing directions of the M scanning fields of view and a splicing manner of the M scanning fields of view are related to a resolution requirement of the detection apparatus. It may also be understood that the pointing directions of the M scanning fields of view and the splicing manner of the M scanning fields of view are determined based on the resolution requirement of the detection apparatus.

In a possible implementation, a pointing direction of a scanning field of view may be represented by an emitting direction of an optical signal at a center of a spatial region corresponding to the scanning field of view.

Based on the foregoing solution, because the pointing directions of the M scanning fields of view and the splicing manner of the M scanning fields of view are related to the resolution requirement of the detection apparatus, a resolution of the detection apparatus may be flexibly regulated by adjusting a pointing direction of at least one of the M scanning fields of view and the splicing manner of the M scanning fields of view, so that different resolution requirements of the detection apparatus can be met. For example, in a full field-of-view range of the detection apparatus, resolutions of some fields of view of the detection apparatus may be relatively high, and resolutions of some fields of view of the detection apparatus may be relatively low. In other words, a degree of controllable freedom of the resolution of the detection apparatus may be improved by changing the pointing direction of the at least one of the M scanning fields of view and the splicing manner of the M scanning fields of view. Further, the full field-of-view range of the detection apparatus may be adjusted by using the pointing directions of the M scanning fields of view and the splicing manner of the M scanning fields of view. The resolution requirement of the detection apparatus is a resolution that needs to be achieved by the detection apparatus. The resolution requirement of the detection apparatus may be pre-stored, or may be determined in real time based on an application scenario of the detection apparatus. The resolution of the detection apparatus is a resolution achieved by the detection apparatus if the pointing directions of the M scanning fields of view and the splicing manner of the M scanning fields of view are determined. It may be understood that the resolution of the detection apparatus is achieved based on the resolution requirement of the detection apparatus.

In a possible implementation, the transmitting module is specifically configured to change a pointing direction of at least one of the M scanning fields of view and/or the splicing manner of the M scanning fields of view, to adjust the resolution of the detection apparatus.

When a structure of the transmitting module is not changed, the resolution of the detection apparatus in the full field-of-view range may be adjusted by changing the pointing direction of the at least one of the M scanning fields of view and/or the splicing manner of the M scanning fields of view, so as to meet different resolution requirements of the detection apparatus. The M scanning fields of view are spliced in a horizontal direction and/or a vertical direction to form the full field-of-view range of the detection apparatus.

In a possible implementation, the transmitting module may include M light source modules, and one light source module corresponds to one scanning field of view. The transmitting module is specifically configured to change a position of at least one of the M light source modules, to change the pointing direction of the at least one of the M scanning fields of view and/or change the splicing manner of the M scanning fields of view.

The M scanning fields of view are individually controlled by using the M light source modules, and a corresponding scanning field of view and/or the splicing manner of the scanning fields of view may be changed by changing the position of the at least one of the M light source modules.

Further, optionally, the splicing manner of the M scanning fields of view includes: splicing in a horizontal direction, splicing in a vertical direction, or splicing in a horizontal direction and splicing in a vertical direction.

A resolution of the detection apparatus in the horizontal direction can be regulated through splicing in the horizontal direction, and a resolution of the detection apparatus in the vertical direction can be regulated through splicing in the vertical direction; and a horizontal resolution and a vertical resolution of the detection apparatus can be regulated through splicing in the horizontal direction and splicing in the vertical direction.

In a possible implementation, the M light source modules are located on a same horizontal plane, or the M light source modules are located on different horizontal planes.

When the M light source modules are located on a same horizontal plane, an overlapping manner of the M scanning fields of view in the horizontal direction may be changed by changing the pointing directions of the M scanning fields of view corresponding to the M light source modules, so that the resolution of the detection apparatus in the horizontal direction may be changed. When the M light source modules are located on different horizontal planes, an overlapping manner of the M scanning fields of view corresponding to the M light source modules in the vertical direction may be changed, so that the resolution of the detection apparatus in the vertical direction may be changed.

Further, optionally, the transmitting module further includes a transmission module. The transmission module is configured to change, as driven by a driving element, a position of at least one of the M light source modules.

In a possible implementation, the transmitting module includes H light source modules and Q optical splitting modules. A combination of the H light source modules and the Q optical splitting modules corresponds to M scanning fields of view, and H and Q are positive integers. The transmitting module is specifically configured to change a position of at least one of the H light source modules, and/or change a turn-on time point and a turn-off time point of at least one of propagation optical paths corresponding to the M scanning fields of view, to change the pointing direction of the at least one of the M scanning fields of view and/or change the splicing manner of the M scanning fields of view.

After the optical signals transmitted by the H light source modules are split by the Q optical splitting modules, the optical signals correspond to the M scanning fields of view. Therefore, by changing the position of the at least one of the H light source modules and/or changing the turn-on time point and the turn-off time point of propagation optical paths corresponding to the M scanning fields of view, the pointing direction of the at least one of the M scanning fields of view and/or the splicing manner of the M scanning fields of view may be changed, so that the resolution of the detection apparatus in the full field-of-view range may be changed.

Further, optionally, the transmitting module further includes a transmission module. The transmission module is configured to change, as driven by a driving element, a position of at least one of the H light source modules.

In a possible implementation, the full field-of-view range of the detection apparatus includes at least one region of interest (region of interest, ROI). Further, the resolution requirement of the detection apparatus is related to at least one of a position, a size, and a resolution requirement of the at least one region of interest.

Further, optionally, the region of interest may include, but is not limited to, a region in which the target is located. In this way, the target can be tracked and focused on.

In another possible implementation, the resolution requirement of the detection apparatus is related to an application scenario of the detection apparatus.

Based on different application scenarios of the detection apparatus, the resolution requirements of the detection apparatus are different. By further adjusting the resolution of the detection apparatus, the detection apparatus can meet requirements of different application scenarios.

In a possible implementation, the detection apparatus further includes a scanning module. The scanning module is configured to reflect, to a to-be-detected region, an optical signal transmitted by the transmitting module, and reflect, to a receiving module, an echo signal obtained by reflecting the optical signal by a target in the to-be-detected region.

The scanning module reflects, to the to-be-detected region, the optical signal transmitted by the transmitting module, so that the to-be-detected region can be detected.

In a possible implementation, the scanning module includes at least one of a polyhedron reflector, a rotating mirror, a pendulum mirror, and a micro-electro-mechanical system (micro electro-mechanical system, MEMS) reflector.

In a possible implementation, the detection apparatus further includes a control module. The control module is configured to generate a control signal based on the resolution requirement of the detection apparatus, and send the control signal to the transmitting module, to control the transmitting module to change the pointing direction of the at least one of the M scanning fields of view and/or the splicing manner of the M scanning fields of view.

Specifically, the control module may be configured to obtain data of K frames of images, determine at least one region of interest (for example, a region in which a to-be-detected target is located) based on the data of the K frames of images, generate the control signal based on the at least one region of interest, and send the control signal to the transmitting module, so as to control the transmitting module to change the pointing direction of the at least one of the M scanning fields of view and/or the splicing manner of the M scanning fields of view, where K is a positive integer.

The region of interest (for example, a "concerned" target) is quickly focused on based on data of first K frames of images, so that computing power of the detection apparatus can be properly used, and unnecessary resource waste is reduced. In addition, a specific target can be tracked and focused on.

According to a second aspect, this application provides a terminal device. The terminal device includes a processor and the detection apparatus according to any one of the first aspect or the possible implementations of the first aspect. The processor is configured to process association information of a target obtained by the detection apparatus; or determine association information of a target based on an echo signal received by the detection apparatus.

In a possible implementation, the association information of the target may include, but is not limited to, distance information of the target, an orientation of the target, a speed of the target, and/or grayscale information of the target.

According to a third aspect, this application provides a resolution regulation method. The method may be applied to the detection apparatus according to any one of the first aspect or the possible implementations of the first aspect. The detection apparatus may include a transmitting module. The transmitting module corresponds to M scanning fields of view, where M is an integer greater than 1. The method includes: obtaining a resolution requirement of the detection apparatus, and regulating pointing directions of the M scanning fields of view and/or a splicing manner of the M scanning fields of view based on the resolution requirement of the detection apparatus.

In a possible implementation, a control signal may be generated based on the resolution requirement of the detection apparatus, and the control signal is sent to the transmitting module, where the control signal is used to control the transmitting module to change a pointing direction of at least one of the M scanning fields of view and/or the splicing manner of the M scanning fields of view.

Further, optionally, data of K frames of images may be obtained, where K is a positive integer. At least one region of interest is determined based on the data of the K frames of images, and the control signal is generated based on the at least one region of interest.

According to a fourth aspect, this application provides a control apparatus. The control apparatus is configured to implement the method according to any one of the third aspect or the possible implementations of the third aspect, and includes corresponding functional modules that are separately configured to implement steps in the foregoing method. Functions may be implemented by hardware, or may be implemented by hardware executing corresponding software. The hardware or software includes one or more modules corresponding to the foregoing functions.

In a possible implementation, the control apparatus is, for example, a chip, a chip system, a logic circuit, or the like. For beneficial effects, refer to the description in the first aspect. Details are not described herein again. The control apparatus may include an obtaining module and a processing module. The processing module may be configured to support the control apparatus in performing a corresponding function in the method according to the third aspect. The obtaining module is configured to support interaction between the control apparatus and a detection apparatus, another functional module in the detection apparatus, or the like.

According to a fifth aspect, this application provides a chip. The chip includes at least one processor and an interface circuit. Further, optionally, the chip may further include a memory. The processor is configured to execute a computer program or instructions stored in the memory, so that the chip performs the method according to any one of the third aspect or the possible implementations of the third aspect.

According to a sixth aspect, this application provides a computer-readable storage medium. The computer-readable storage medium stores a computer program or instructions. When the computer program or the instructions are executed by a control apparatus, the control apparatus is enabled to perform the method according to any one of the third aspect or the possible implementations of the third aspect.

According to a seventh aspect, this application provides a computer program product. The computer program product includes a computer program or instructions. When the computer program or the instructions are executed by a control apparatus, the control apparatus is enabled to perform the method according to any one of the third aspect or the possible implementations of the third aspect.

For technical effects that can be achieved in any one of the second aspect to the seventh aspect, refer to descriptions of beneficial effects in the first aspect. Details are not described herein again.

**BRIEF DESCRIPTION OF DRAWINGS**

FIG. 1a is a schematic diagram of a position relationship of a detection apparatus on a vehicle according to this application;

FIG. 1b shows an example of a schematic diagram of a possible application scenario of this application;

FIG. 2 is a schematic diagram of a structure of a detection apparatus according to this application;

FIG. 3 is a schematic diagram of a relationship between scanning fields of view and a full field-of-view range of a detection apparatus according to this application;

FIG. 4a is a resolution requirement of a detection apparatus according to this application;

FIG. 4b is a resolution requirement of another detection apparatus according to this application;

FIG. 4c is a resolution requirement of another detection apparatus according to this application;

FIG. 4d is a resolution requirement of another detection apparatus according to this application;

FIG. 4e is a resolution requirement of another detection apparatus according to this application;

FIG. 4f is a resolution requirement of another detection apparatus according to this application;

FIG. 5a is a schematic diagram of a position relationship between M light source modules according to this application;

FIG. 5b is a schematic diagram of another position relationship between M light source modules according to this application;

FIG. 6 is a schematic diagram of a structure of a light source array according to this application;

FIG. 7 is a schematic diagram of a structure of a pixel array according to this application;

FIG. 8a is a schematic diagram of a structure of an optical receiving module and an optical transmitting module in which reception and transmission are coaxial according to this application;

FIG. 8b is a schematic diagram of a structure of an optical receiving module and an optical transmitting module in which reception and transmission are abaxial according to this application;

FIG. 9 is a schematic diagram of a structure of a detection apparatus according to this application.

FIG. 10 is a schematic diagram of overlapping of scanning fields of view according to this application;

FIG. 11 is a schematic diagram of a structure of a terminal device in this application;

FIG. 12 is a schematic diagram of a resolution control method according to this application;

FIG. 13 is a schematic diagram of a structure of a control apparatus according to this application; and

FIG. 14 is a schematic diagram of a structure of a control apparatus according to this application.

## DESCRIPTION OF EMBODIMENTS

The following describes in detail embodiments of this application with reference to the accompanying drawings.

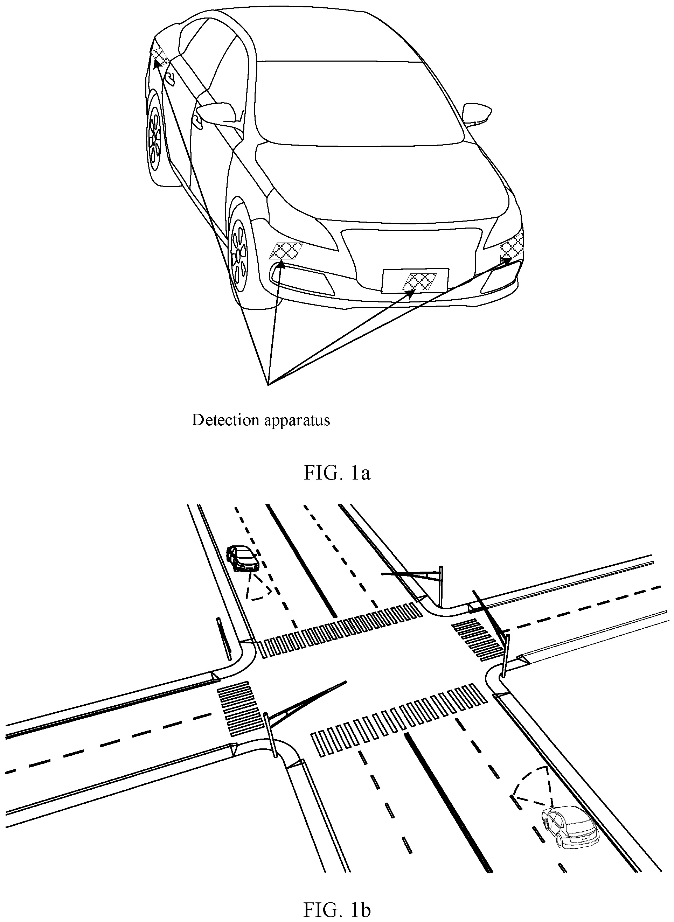

A detection apparatus provided in this application may be installed in a transport means, and may be specifically installed in various positions of the transport means. For example, the detection apparatus may be installed in any one or more directions of four directions: front, rear, left, and right of the transport means, to capture information about an environment around the transport means. As shown in FIG. 1a, an example in which a transport means is a vehicle is used, and an example in which a detection apparatus is installed in six directions of the vehicle: front, front left, front right, rear left, back (not shown in FIG. 1a), and back right (not shown in FIG. 1a) is used.

FIG. 1b shows an example of a schematic diagram of a possible application scenario of this application. The detection apparatus may sense a fan-shaped region shown in a dashed box in the figure, and the fan-shaped region may be referred to as a to-be-detected region of the detection apparatus. The detection apparatus may obtain, in real time or periodically, a longitude and latitude, a speed, and an orientation of a vehicle, or information (for example, a distance of a target, a moving speed of the target, or a posture of the target) about the target (for example, another surrounding vehicle or an obstacle) in a specific range. The detection apparatus or the vehicle may determine a position of the vehicle based on the obtained information, and may perform route planning and the like. For example, a position of the vehicle is determined by using the longitude and latitude. Alternatively, a traveling direction and a destination of the vehicle in a future period of time are determined by using the speed and the orientation. Alternatively, a quantity of obstacles around the vehicle, a density of the obstacles, and the like are determined by using the distance to the surrounding object. Further, optionally, in light of a function of an advanced driver assistance system (advanced driving assistant system, ADAS), assisted driving, autonomous driving, or the like of the vehicle may be implemented. It should be understood that a principle of detecting a target by a detection apparatus is as follows: The detection apparatus transmits signal light in a specific direction. If a target exists in a to-be-detected region of the detection apparatus, the target may reflect the received signal light back to the detection apparatus (the reflected light may be referred to as an echo signal), and then the detection apparatus determines information about the target based on the echo signal.

It should be noted that the foregoing application scenario is merely an example. The detection apparatus (the detection apparatus includes an optical receiving system provided in this application) provided in this application may be further applied to a plurality of other possible scenarios, and is not limited to the scenario shown in the foregoing example. For example, the detection apparatus may alternatively be installed on an uncrewed aerial vehicle as an airborne radar. For another example, the detection apparatus may alternatively be installed in a roadside unit (roadside unit, RSU), and used as a roadside traffic detection apparatus, to implement intelligent vehicle-road cooperative communication and the like. For still another example, the detection apparatus may be installed on an automated guided vehicle (automated guided vehicle, AGV), where the AGV is a transport vehicle equipped with an automatic navigation apparatus such as an electromagnetic or optical navigation apparatus, capable of traveling along a specified navigation path, and having security protection and various load transfer functions. For yet another example, the detection apparatus may alternatively be applied to scenarios such as telemedicine, remote training, multi-player gaming, and multi-player training. This is not listed one by one herein. It should be understood that, the application scenarios described in this application are intended to describe the technical solutions in this application more clearly, and do not constitute a limitation on the technical solutions provided in this application. A person of ordinary skill in the art may know that, with emergence of a new application scenario, the technical solutions provided in this application are also applicable to technical problems similar to those in the background.

The foregoing application scenarios may be applied to fields such as unmanned driving, autonomous driving, assisted driving, intelligent driving, connected vehicles, security monitoring, remote interaction, artificial intelligence, or surveying and mapping (for example, outdoor three-dimensional drawing).

Based on the foregoing content, this application provides a detection apparatus. A resolution of the detection apparatus may be flexibly regulated based on a resolution requirement of the detection apparatus. It may also be understood that the detection apparatus may meet different resolution requirements.

In a possible implementation, the detection apparatus may include a transmitting module. The transmitting module corresponds to M scanning fields of view, where M is an integer greater than 1. Pointing directions of the M scanning fields of view and a splicing manner of the M scanning fields of view are related to the resolution requirement of the detection apparatus. It may also be understood that the pointing directions of the M scanning fields of view and the splicing manner of the M scanning fields of view are determined based on the resolution requirement of the detection apparatus. Alternatively, it may be understood that a pointing direction of at least one of the M scanning fields of view and the splicing manner of the M scanning fields of view are regulated based on the resolution requirement of the detection apparatus, to adjust resolutions of different fields of view in a full field-of-view range (or referred to as an entire field-of-view range) of the detection apparatus.

A pointing direction of a scanning field of view may be represented by an emitting direction of an optical signal at a center of a spatial region corresponding to the scanning field of view. This is not limited in this application. Further, if a direction in the full field-of-view range of the detection apparatus is 0 degrees, an included angle between a pointing direction of a scanning field of view and the 0-degree direction may be referred to as a directional angle. An included angle between pointing directions of different scanning fields of view is referred to as an included angle between the pointing directions. It may be understood that a scanning field of view may also be referred to as an optical channel.

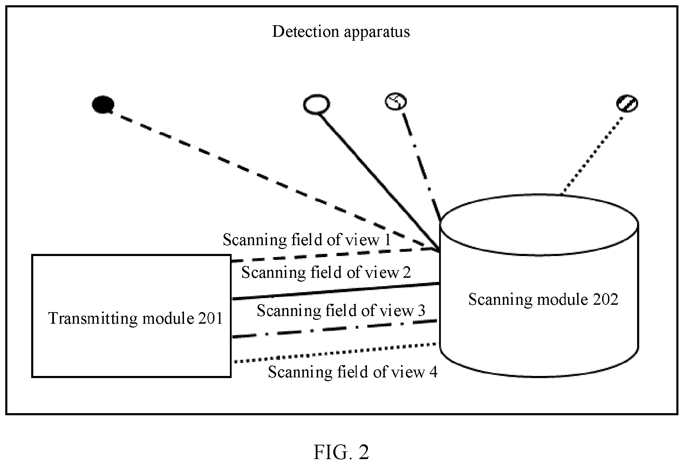

FIG. 2 is a schematic diagram of a structure of a detection apparatus according to this application. The detection apparatus includes a transmitting module 201. In this example, the transmitting module 201 corresponds to four scanning fields of view. A pointing direction of each of the four scanning fields of view is represented by an emitting direction of an optical signal at a center of a spatial region corresponding to the scanning field of view. The four scanning fields of view are represented by a scanning field of view 1, a scanning field of view 2, a scanning field of view 3, and a scanning field of view 4. Further, optionally, the detection apparatus may further include a scanning module 202. The optical signal transmitted by the transmitting module 201 is reflected to a to-be-detected region by the scanning module 202, to implement scanning (or referred to as detection) of the to-be-detected region.

Based on the foregoing detection apparatus, because the pointing directions of the M scanning fields of view and the splicing manner of the M scanning fields of view are related to the resolution requirement of the detection apparatus, the resolution of the detection apparatus may be flexibly regulated by adjusting the pointing direction of the at least one of the M scanning fields of view and the splicing manner of the M scanning fields of view. For example, the pointing direction of the at least one of the M scanning fields of view and the splicing manner of the M scanning fields of view may be adjusted, so that in the full field-of-view range of the detection apparatus, some fields of view correspond to relatively high resolutions, and some fields of view correspond to relatively low resolutions. In this way, different resolution requirements of the detection apparatus can be met. In other words, a degree of controllable freedom of the resolution of the detection apparatus may be improved by changing the pointing direction of the at least one of the M scanning fields of view and the splicing manner of the M scanning fields of view. In addition, based on the detection apparatus, parameters such as a rotation speed and an inclination angle of the scanning module do not need to be changed. Further, a size of the full field-of-view range of the detection apparatus may be adjusted by using the pointing directions of the M scanning fields of view and the splicing manner of the M scanning fields of view.

The resolution requirement of the detection apparatus is a resolution that needs to be achieved by the detection apparatus. The resolution of the detection apparatus is a resolution achieved by the detection apparatus if the pointing directions of the M scanning fields of view and the splicing manner of the M scanning fields of view are determined. It may be understood that, the resolution of the detection apparatus is a resolution achieved by the detection apparatus based on the resolution requirement of the detection apparatus after the pointing direction of the at least one of the M scanning fields of view and the splicing manner of the M scanning fields of view are adjusted. The resolution of the detection apparatus is a resolution corresponding to the full field-of-view range of the detection apparatus. In the full field-of-view range of the detection apparatus, some fields of view may correspond to relatively high resolutions, and some fields of view may correspond to relatively low resolutions.

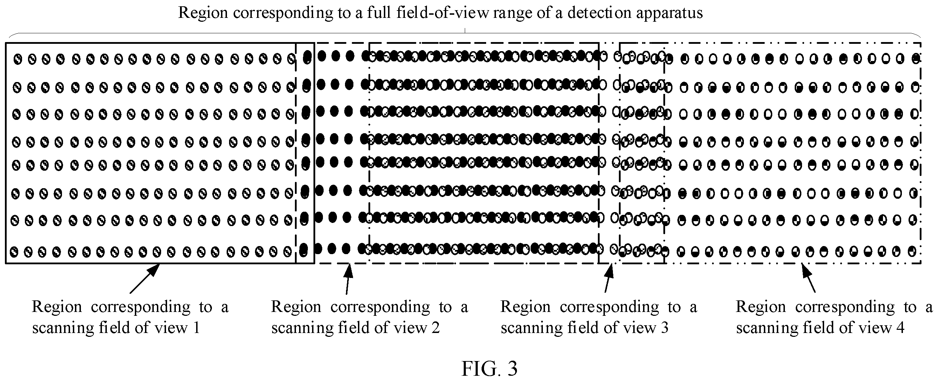

In a possible implementation, sizes of the M scanning fields of view may be the same or may be different. This is not limited in this application. Further, optionally, the sizes of the M scanning fields of view may also be flexibly controlled. The M scanning fields of view may be spliced in a horizontal direction and/or a vertical direction, and a field of view obtained after splicing is the full field-of-view range of the detection apparatus. As shown in FIG. 3, four scanning fields of view are used as an example. In an entire scanning period, the detection apparatus may complete scanning of a full field-of-view range of a to-be-detected region, where the full field-of-view range of the to-be-detected region may be obtained by splicing the four scanning fields of view. The scanning field of view 2 and the scanning field of view 3 partially overlap, and the scanning field of view 3 and the scanning field of view 4 partially overlap. The scanning field of view 2 and the scanning field of view 3 are used as an example, and a resolution of an overlapping portion is equal to a sum of a resolution corresponding to the scanning field of view 2 and a resolution corresponding to the scanning field of view 3. It may be understood that the resolution of the overlapping portion is higher than the resolution corresponding to the scanning field of view 2, and is also higher than the resolution corresponding to the scanning field of view 3.

In FIG. 3, ellipses in a region corresponding to each scanning field of view represent light spots that are formed when an optical signal transmitted by the transmitting module is emitted into the to-be-detected region. The light spots in the regions corresponding to the four scanning fields of view may be formed by emitting, into the to-be-detected region, an optical signal transmitted by the transmitting module in one time, or may be formed by emitting, into the to-be-detected region, optical signals transmitted by the transmitting module in four times. For example, an optical signal transmitted by the transmitting module for the first time forms light spots in a region corresponding to the scanning field of view 1, an optical signal transmitted for the second time forms light spots in a region corresponding to the scanning field of view 2, an optical signal transmitted for the third time forms light spots in a region corresponding to the scanning field of view 3, and an optical signal transmitted for the fourth time forms light spots in a region corresponding to the scanning field of view 4. Alternatively, an optical signal transmitted by the transmitting module for the first time may form some light spots in any one or more corresponding regions of the scanning field of view 1, the scanning field of view 2, the scanning field of view 3, and the scanning field of view 4, and optical signals are successively projected to the to-be-detected region in a preset sequence, to finally form light spot distribution in a region corresponding to the full field-of-view range of the detection apparatus. When the resolution of the detection apparatus is implemented in this application, a specific sequence of transmitting optical signals by the transmitting module is not limited. It may be understood that the light spots in the region corresponding to the scanning field of view may also be in another possible shape, for example, a circle or another possible irregular pattern. The ellipse is used as an example in FIG. 3. In addition, an example in which the region corresponding to the scanning field of view is a rectangle is used. A shape of the region corresponding to the scanning field of view is not limited in this application. For example, the region may be a square, or another regular or irregular shape.

The following describes the resolution requirement of the detection apparatus.

In a possible implementation, the resolution requirement of the detection apparatus is related to an application scenario of the detection apparatus. For example, the application scenario of the detection apparatus may include: The detection apparatus is applied to long-distance detection, for example, outdoor navigation and long-distance target positioning. Specifically, when a vehicle is driving on a road, attention needs to be paid to a distant dynamic target (for example, a vehicle), a static target (for example, an obstacle), and the like. For another example, the detection apparatus may alternatively be applied to short-distance detection, for example, face modeling and small object modeling. For still another example, the detection apparatus may alternatively be applied to long-distance detection that requires a large full field-of-view range. For yet another example, the detection apparatus may alternatively be applied to a scenario in which a central region in a full field-of-view range has a relatively high resolution requirement, and the like. This is not listed one by one herein. It may be understood that when the detection apparatus is applied to different scenarios, corresponding resolution requirements may also be different.

In another possible implementation, the resolution requirement of the detection apparatus is related to at least one region of interest in the full field-of-view range of the detection apparatus. There may be one or more regions of interest in the full field-of-view range of the detection apparatus, and resolution requirements of different regions of interest may be the same or different. For example, both regions in which a dynamic target and a static target that need to be detected by the detection apparatus are located are regions of interest, and resolution requirements of the regions in which the dynamic target and the static target are located may be different. In the full field-of-view range of the detection apparatus, the region of interest needs to be focused on compared with other regions. Specifically, the resolution of the detection apparatus may be related to at least one of a position, a size, and a resolution requirement of the region of interest. The region of interest may be, for example, a region in which a "concerned" target is located, or may be a region corresponding to a central field of view of the full field-of-view range of the detection apparatus, or may be an axisymmetric region corresponding to two sides of a central field of view of the full field-of-view range of the detection apparatus. The region of interest may be a region determined in a manner such as a box, a circle, an ellipse, or another regular or irregular pattern.

The following provides examples of two possible implementations of obtaining the resolution requirement of the detection apparatus.

Implementation A: The resolution requirement of the detection apparatus is determined based on data of first K frames of images obtained by the detection apparatus.

In a possible implementation, data of the K frames of images may be first obtained, and at least one region of interest is determined based on the data of the K frames of images. The region of interest may be a region in which a "concerned" target (for example, a dynamic target and/or a static target) is located. Further, it may be determined that a resolution of the region of interest needs to be increased, and a resolution of a region in which the dynamic target is located may be set to be higher than a resolution of a region in which the static target is located. Specifically, the specific resolution of the detection apparatus determined based on the region of interest may be pre-stored.

Implementation B: The resolution requirement of the detection apparatus is determined based on an application scenario of the detection apparatus.

In a possible implementation, the detection apparatus has different resolution requirements in different application scenarios. Alternatively, a relationship between an application scenario of the detection apparatus and a resolution requirement of the detection apparatus may be pre-stored. The application scenario of the detection apparatus may be selected by a user by operating an application on the detection apparatus.

It should be noted that the foregoing three implementations for obtaining the resolution requirement of the detection apparatus are merely examples. In this application, a basic condition of a surrounding environment of the detection apparatus may be further obtained by using another sensor such as a camera (camera), a solar tracker, or an inertial measurement unit (inertial measurement unit, IMU), so that the basic condition of the surrounding environment serves as input information of the detection apparatus. The detection apparatus may obtain the resolution requirement based on the input information. Alternatively, switching may be performed between several fixed scenarios built in the detection apparatus based on several specific condition inputs (such as a solar light intensity and an azimuth), and each scenario is preset to correspond to one resolution requirement.

For ease of description of the solution, the following uses an example in which the transmitting module corresponds to four scanning fields of view (which are referred to as a scanning field of view 1, a scanning field of view 2, a scanning field of view 3, and a scanning field of view 4), and one scanning field of view corresponds to one linear rectangle. The following provides examples of three possible resolution requirements.

The following uses an example in which resolutions of the four scanning fields of view are the same, where a resolution of each scanning field of view is P. In the following, a 1x resolution is one time of the resolution P, a 2x resolution is two times of the resolution P, a 3x resolution is three times of the resolution P, a 4x resolution is four times of the resolution P, and the like.

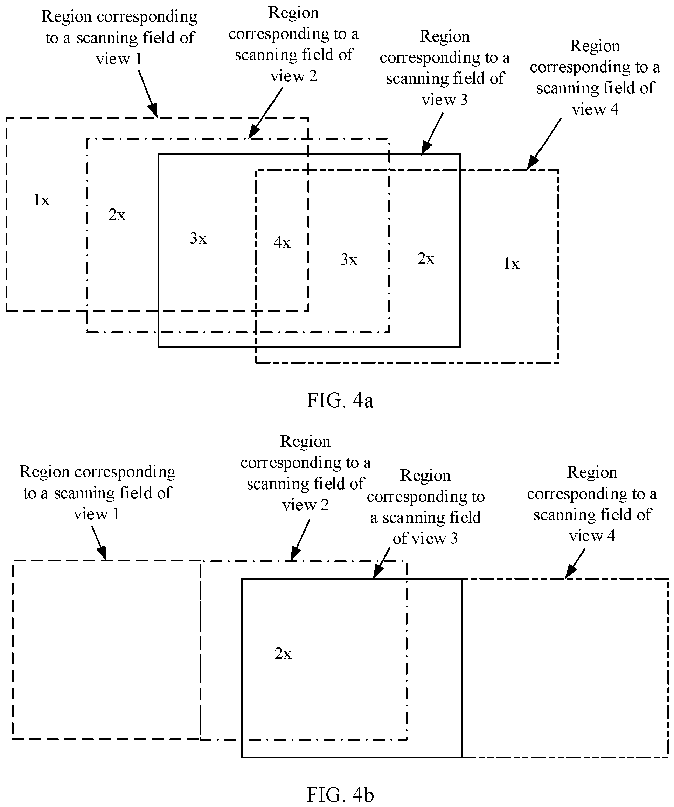

Resolution requirement 1: There is a resolution gradient in the detection apparatus. As shown in FIG. 4a, the resolution requirement in the full field-of-view range of the detection apparatus is: the 1x resolution, the 2x resolution, the 3x resolution, the 4x resolution, the 3x resolution, the 2x resolution, and 1x resolution from left to right. Specifically, a region corresponding to the scanning field of view 1 and a region corresponding to the scanning field of view 2 partially overlap, and a resolution corresponding to an overlapping region is the 2x resolution. The region corresponding to the scanning field of view 1, the region corresponding to the scanning field of view 2, and a region corresponding to the scanning field of view 3 partially overlap, and a resolution corresponding to an overlapping region is the 3x resolution. The region corresponding to the scanning field of view 1, the region corresponding to the scanning field of view 2, the region corresponding to the scanning field of view 3, and a region corresponding to the scanning field of view 4 partially overlap, and a resolution corresponding to an overlapping region is the 4x resolution. The region corresponding to the scanning field of view 2, the region corresponding to the scanning field of view 3, and the region corresponding to the scanning field of view 4 partially overlap, and a resolution corresponding to an overlapping region is the 3x resolution. The region corresponding to the scanning field of view 3 and the region corresponding to the scanning field of view 4 partially overlap, and a resolution corresponding to an overlapping region is the 2x resolution. Resolutions of other regions are 1x resolutions.

Resolution requirement 2: The detection apparatus has a relatively large full field-of-view range, and a central region in the full field-of-view range of the detection apparatus has a 2x resolution, as shown in FIG. 4b. Specifically, a region corresponding to the scanning field of view 2 and a region corresponding to the scanning field of view 3 partially overlap, a resolution corresponding to an overlapping region is the 2x resolution, and resolutions of other regions are 1x resolutions. Resolutions of a region corresponding to the scanning field of view 1 and a region corresponding to the scanning field of view 4 are both 1x resolutions.

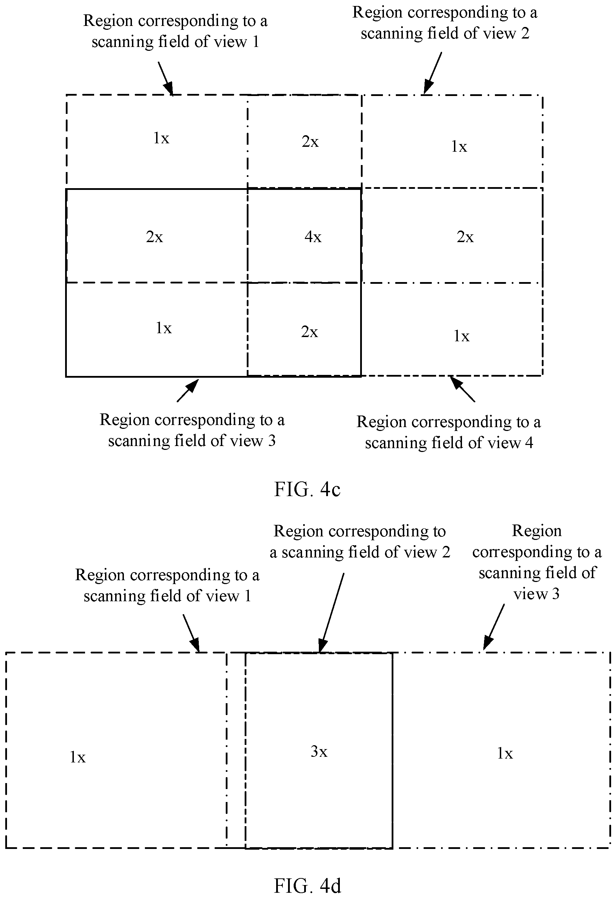

Resolution requirement 3: A central region in the full field-of-view range of the detection apparatus has the 4x resolution, resolutions of upper, lower, left, and right regions of the region with the 4x resolution are 2x resolutions, and resolutions of other regions are 1x resolutions, as shown in FIG. 4c. Specifically, a region corresponding to the scanning field of view 1 and a region corresponding to the scanning field of view 2 partially overlap, and a resolution corresponding to an overlapping region is the 2x resolution; the region corresponding to the scanning field of view 1 and a region corresponding to the scanning field of view 3 partially overlap, and a resolution corresponding to an overlapping region is the 2x resolution; the region corresponding to the scanning field of view 3 and a region corresponding to the scanning field of view 4 partially overlap, and a resolution corresponding to an overlapping region is the 2x resolution; the region corresponding to the scanning field of view 2 and the region corresponding to the scanning field of view 4 partially overlap, and a resolution corresponding to an overlapping region is the 2x resolution; and the region corresponding to the scanning field of view 1, the region corresponding to the scanning field of view 2, the region corresponding to the scanning field of view 3, and the region corresponding to the scanning field of view 4 partially overlap, and a resolution corresponding to an overlapping region is the 4x resolution. Resolutions of other regions are 1x resolutions.

The following provides examples of two possible resolution requirements of the detection apparatus by using an example in which the transmitting module corresponds to three scanning fields of view (which are a scanning field of view 1, a scanning field of view 2, and a scanning field of view 3).

Resolution requirement 4: A central region in the full field-of-view range of the detection apparatus has the 3x resolution, as shown in FIG. 4d. Specifically, a region corresponding to the scanning field of view 1 and a region corresponding to the scanning field of view 2 partially overlap, an overlapping region completely overlaps a region corresponding to the scanning field of view 3, a resolution corresponding to an overlapping region is the 3x resolution, and resolutions of other regions are 1x resolutions.

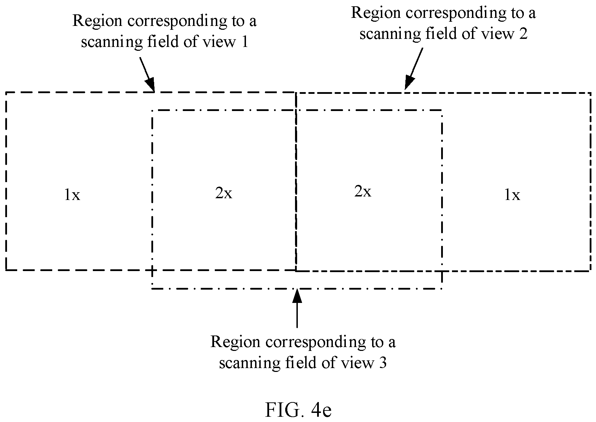

A resolution requirement 5: A central region in the full field-of-view range of the detection apparatus has an axisymmetric 2x resolution. In other words, a point cloud in a symmetric field-of-view range of the central region is twice encrypted, as shown in FIG. 4e. Specifically, a region corresponding to the scanning field of view 1 and a region corresponding to the scanning field of view 3 partially overlap, and a resolution corresponding to an overlapping region is the 2x resolution; a region corresponding to a scanning field of view 2 and the region corresponding to the scanning field of view 3 partially overlap, and a resolution corresponding to an overlapping region is the 2x resolution; and resolutions of other regions are 1x resolutions.

Based on the resolution requirement of the detection apparatus, the detection apparatus can implement high-performance detection of a specific region and effective detection of a wide field-of-view range, so that scenario requirements of both a long-range LiDAR (long range lidar, LRL) and a middle-range LiDAR (middle range lidar, MRL) can be met.

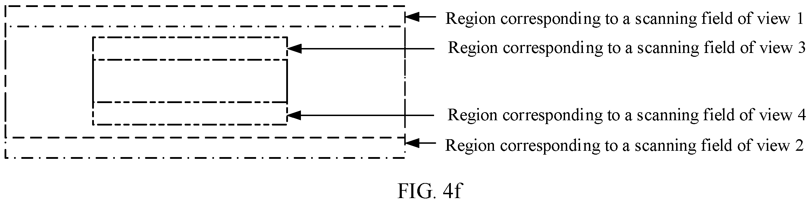

It may be understood that, the resolution requirements of the detection apparatus provided above are merely examples, and there may also be any another possible resolution requirement, such as a resolution requirement of the detection apparatus shown in FIG. 4f. In addition, implementation of any one of the foregoing resolution requirements of the detection apparatus is not limited to the manner provided in the foregoing figures, and any another splicing manner that can implement the resolution requirement can be used. This is not limited in this application.

It should be noted that in the foregoing resolution requirements of the detection apparatus, at least two of the M scanning fields of view overlap or are connected. However, in actual application, at least two of the M scanning fields of view may alternatively be not connected (or referred to as discontinuous), or may be understood as that the M scanning fields of view do not completely cover the to-be-detected region. In other words, there is a region, in the to-be-detected region, that is not scanned by the M scanning fields of view.

The following describes in detail the functional modules shown in FIG. 2, to provide an example of a specific implementation solution. For ease of description, neither the transmitting module nor the scanning module in the following is added with a digital identifier.

1. Transmitting module

In a possible implementation, the transmitting module may change (or be referred to as regulating) a pointing direction of at least one of the M scanning fields of view, and further may regulate a splicing manner of the M scanning fields of view, so that the resolution of the detection apparatus can be adjusted to meet the resolution requirement of the detection apparatus.

The following describes, in different cases based on a structure of the transmitting module, possible implementations in which the transmitting module changes a pointing direction of at least one of the M scanning fields of view.

Case 1: The transmitting module includes M light source modules, and one light source module corresponds to one scanning field of view.

Based on Case 1, the M light source modules correspond to M scanning fields of view. It may also be understood that the M scanning fields of view are individually controlled by the M light source modules.

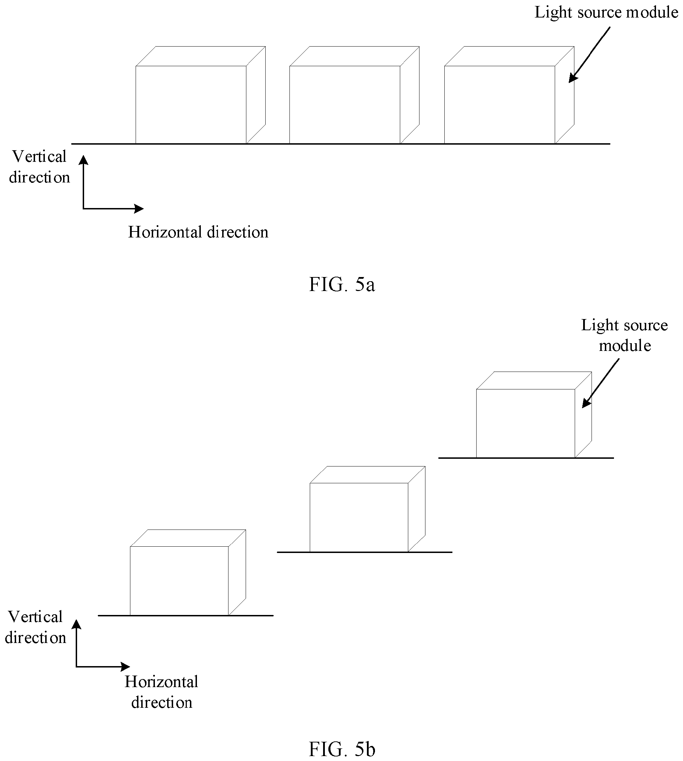

In a possible implementation, the M light source modules may be located on a same horizontal plane, or may be understood as that the M light source modules are located at a same layer, or may be understood as that the M light sources are distributed in one dimension, as shown in FIG. 5a. It should be understood that in FIG. 5a, M=3 is used as an example. A specific quantity of M is not limited in this application.

Alternatively, the M light source modules may be located on different horizontal planes, or may be understood as that the M light source modules are located at different layers, or may be understood as that the M light source modules are distributed in two dimensions, as shown in FIG. 5b. It should be understood that in FIG. 5b, M=3 is used as an example. A specific quantity of M is not limited in this application.

In a possible implementation, an overlapping relationship of the M scanning fields of view may be changed by changing a pointing direction of at least one of the M scanning fields of view, so as to meet a resolution requirement and a field-of-view requirement of the detection apparatus. The following provides examples of three possible manners of changing the overlapping relationship of the M scanning fields of view.

Manner 1: The M light source modules may be disposed on a transmission module. The transmission module may drive, as driven by a driving module, at least one of the M light source modules to move, to change a pointing direction of a scanning field of view corresponding to the at least one of the M light source modules, that is, change an included angle between pointing directions of the M scanning fields of view, so that the overlapping relationship of the M scanning fields of view may be changed. The transmission module may be, for example, a sliding rail, a guide rail, a guide screw (for example, a ball screw), a screw, a gear, or a cam cylinder. The driving module may be, for example, a stepper motor, a voice coil motor, a motor (for example, a stepper motor, a direct current motor, a mute motor, or a servo motor), or a micro scanner.

Specifically, as shown in Table 1, the detection apparatus may pre-store a relationship between a resolution requirement and a pointing direction of each of the M scanning fields of view. For example, the detection apparatus pre-stores n resolution requirements and pointing directions of M scanning fields of view corresponding to the n resolution requirements.

**Table 1 Relationship between a resolution requirement and a pointing direction of a scanning field of view**

|  | Pointing direction of a scanning field of view 1 | ... | Pointing direction of a scanning field of view M |
|---|---|---|---|
| Resolution requirement 1 | Pointing direction $_{11}$ | ... | Pointing direction $_{1M}$ |
| ... | ... | ... | ... |
| Resolution requirement n | Pointing direction $_{n1}$ | ... | Pointing direction $_{nM}$ |

Further, as shown in Table 2, the detection apparatus may further pre-store a relationship between a resolution requirement and a position of a light source module. The position of the light source module may be represented by using three-dimensional coordinates (x, y, z).

**Table 2 Relationship between a resolution requirement and a position of a light source module**

|  | Light source module 1 | ... | Light source module M |
|---|---|---|---|
| Resolution requirement 1 | Position $_{11}$ | ... | Position $_{1M}$ |
| ... | ... | ... | ... |
| Resolution requirement n | Position $_{n1}$ | ... | Position $_{nM}$ |

Alternatively, the detection apparatus may pre-store a conversion relationship between the pointing directions of the M scanning fields of view and the positions of the light source modules. Further, the detection apparatus may determine the pointing directions of the M scanning fields of view based on a resolution requirement, and then determine a position of each of the M light source modules based on the conversion relationship between the pointing directions of the M scanning fields of view and the positions of the light source modules, so that a control module may control the driving module to drive the transmission module to drive the M light source modules to change positions, thereby meeting the resolution requirement of the detection apparatus.

Alternatively, the detection apparatus may pre-store a conversion relationship between the resolution requirements and the positions of the light source modules. Further, the detection apparatus may determine a position of each of the M light source modules based on a resolution requirement, so that a control module may control the driving module to drive the transmission module to drive the M light source modules to change positions, thereby meeting the resolution requirement of the detection apparatus.

Manner 2: A control module controls a turn-on time point and a turn-off time point for transmitting an optical signal by each of the M light source modules, to change the overlapping relationship of the M scanning fields of view.

In a possible implementation, as shown in Table 3, the detection apparatus may pre-store a relationship between a resolution requirement and a turn-on time point and a turn-off time point for transmitting an optical signal by each of the M light source modules. A pointing direction of a corresponding scanning field of view may be changed by changing a turn-on time point and a turn-off time point for transmitting an optical signal by at least one of the M light source modules.

**Table 3 Relationship between a resolution requirements and a turn-on time point and a turn-off time point for transmitting an optical signal by each of the M light source modules**

| | Turn-on time point and a turn-off time point for transmitting an optical signal by a light source module 1 | ... | Turn-on time point and a turn-off time point for transmitting an optical signal by a light source module M |
|---|---|---|---|
| Resolution requirement 1 | $t_{11}$ to $t_{1i}$ | ... | $t_{1M}$ to $t_{1j}$ |
| ... | ... | ... | ... |
| Resolution requirement n | $t_{n1}$ to $t_{ni}$ | ... | $t_{nM}$ to $t_{nj}$ |

Further, the detection apparatus may further pre-store a relationship between a turn-on sequence of the M light source modules and a resolution requirement.

For example, if the resolution requirement of the detection apparatus is the resolution requirement 1, the turn-on time point for transmitting an optical signal by the light source module 1 is $t_{11}$, and the turn-off time point is $t_{1i}$; and the time point for transmitting an optical signal by the light source module M is $t_{1M}$, and the turn-off time point is $t_{1j}$. It may also be understood that the control module may flexibly control turn-on duration of a light source module, to meet different resolution requirements.

Manner 3: A control module may control an energy split ratio of the M scanning fields of view, so that the overlapping relationship of the M scanning fields of view may be changed.

In a possible implementation, as shown in Table 4, the detection apparatus may pre-store a relationship between a resolution requirement and an energy percentage of an optical signal transmitted by each of the M light source modules. The energy percentages of optical signals transmitted by the M light source modules are changed, to change the pointing direction of the at least one of the M scanning fields of view.

**Table 4 Relationship between a resolution requirement and an energy percentage of an optical signal transmitted by a light source module**

| | Energy percentage of an optical signal transmitted by a light source module 1 | ... | Energy percentage of an optical signal transmitted by a light source module 2 |
|---|---|---|---|
| Resolution requirement 1 | $a_{11}\%$ | ... | $a_{1M}\%$ |
| ... | ... | ... | ... |
| Resolution requirement n | $a_{n1}\%$ | ... | $a_{nM}\%$ |

It should be noted that the foregoing three manners are merely examples. A specific manner of changing the pointing direction of the at least one of the M scanning fields of view is not limited in this application. For example, the pointing direction of the at least one of the M scanning fields of view may alternatively be changed by using a combination of any two or three of the foregoing three manners.

Case 2: The transmitting module includes H light source modules and Q optical splitting modules, and a combination of the H light source modules and the Q optical splitting modules corresponds to the M scanning fields of view.

It may also be understood that H optical signals transmitted by the H light source modules correspond to the M scanning fields of view after being split by the Q optical splitting modules. For example, H may be equal to 1, and the M scanning fields of view may be obtained after an optical splitting module splits an optical signal transmitted by a same light source module.

For example, the optical splitting module may be a diffractive optical element (diffractive optical element, DOE). The DOE may evenly divide an optical signal transmitted by a light source module into a plurality of optical signals, and a propagation direction of the optical signals may be flexibly designed depending on an actual requirement. It may be understood that, a quantity of optical signals split by the DOE and an interval between the optical signals may be determined based on a physical structure of the DOE. It should be noted that the optical splitting module may evenly split energy of an incoming optical signal, or may not evenly split energy of an incoming optical signal. This is not limited in this application.

In a possible implementation, the H light source modules may be located on a same horizontal plane, or it may be understood that the H light source modules are located at a same layer, or it may be understood that the H light source modules are distributed in one dimension. Alternatively, the H light source modules may be located on different horizontal planes, or it may be understood that the H light source modules are located at different layers, or it may be understood that the H light source modules are distributed in two dimensions.

The following provides examples of three possible manners of changing the pointing direction of the at least one of the M scanning fields of view to change the overlapping relationship of the M scanning fields of view.

Manner A: The transmitting module is configured to change a position of at least one of the H light source modules, to change the pointing direction of the at least one of the M scanning fields of view and/or change the splicing manner of the M scanning fields of view, so that the overlapping relationship of the M scanning fields of view may be changed. For this process, refer to the foregoing descriptions of Manner 1 of Case 1. Specifically, the "M light source modules" in Manner 1 of Case 1 may be replaced with the "H light source modules". Details are not described herein again.

Manner B: The transmitting module may be configured to change a turn-on time point and a turn-off time point of at least one of propagation optical paths corresponding to the M scanning fields of view, to change the pointing direction of the at least one of the M scanning fields of view and/or change the splicing manner of the M scanning fields of view, so that the overlapping relationship of the M scanning fields of view may be changed.

In a possible implementation, as shown in Table 5, the detection apparatus may pre-store a resolution requirement and a turn-on time point and a turn-off time point of each of the M propagation optical paths corresponding to the M scanning fields of view.

**Table 5 Relationship between a resolution requirement and a turn-on time point and a turn-off time point of each of the M propagation optical paths**

|  | Turn-on time point and a turn-off time point of an optical path 1 | ... | Turn-on time point and a turn-off time point of an optical path M |
|---|---|---|---|
| Resolution requirement 1 | $t_{11}'$ to $t_{1i}'$ | ... | $t_{1M}'$ to $t_{1j}'$ |
| ... | ... | ... | ... |
| Resolution requirement n | $t_{n1}'$ to $t_{ni}'$ | ... | $t_{nM}'$ to $t_{nj}'$ |

Manner C: The transmitting module may be configured to change a position of at least one of the H light source modules, and change a turn-on time point and/or a turn-off time point of at least one of the propagation optical paths corresponding to the M scanning fields of view, to change the pointing direction of the at least one of the M scanning fields of view and/or change the splicing manner of the M scanning fields of view, so that the overlapping relationship of the M scanning fields of view may be changed. For details, refer to the foregoing descriptions of Manner A and Manner B. Details are not described herein again.

It should be noted that the M scanning fields of view may overlap in a horizontal direction, and/or may overlap in a vertical direction. Further, the M scanning fields of view are controlled to overlap in the horizontal direction, so that a requirement of a resolution (referred to as a horizontal resolution) of the detection apparatus in the horizontal direction and a requirement of a field of view (referred to as a horizontal field of view) of the detection apparatus in the horizontal direction can be met. In addition, the horizontal resolution in the overlapping region is relatively high. The M scanning fields of view are controlled to overlap in the vertical direction, so that a requirement of a resolution (referred to as a vertical resolution) of the detection apparatus in the vertical direction and a requirement of a field of view (referred to as a vertical field of view) of the detection apparatus in the vertical direction can be met. In addition, the vertical resolution in the overlapping region is relatively high.

In a possible implementation, the light source module may be, for example, a spot light source, a light source array, or another light source applicable to the detection apparatus. For example, the light source module may include, for example, a vertical cavity surface emitting laser (vertical cavity surface emitting laser, VCSEL), an edge emitting laser (edge emitting laser, EEL), a diode pumped solid state laser (diode pumped solid state laser, DPSS), an optical fiber laser, or a solid-state laser. The light source module may transmit a pulse optical signal.

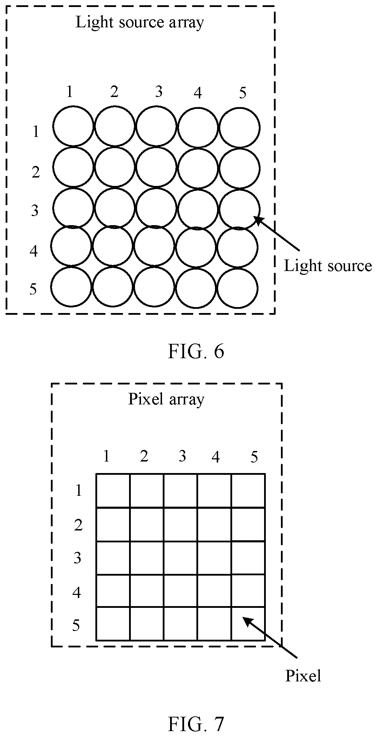

The light source array may be represented as m × n, or it may be understood that the light source array may include m rows and n columns. Herein, m is an integer greater than 1, and n is a positive integer; or m is a positive integer, and n is an integer greater than 1. FIG. 6 is a schematic diagram of a structure of a light source array according to this application. An example in which m × n = 5 × 5 is used for the light source array. In other words, in this example, the light source array has five rows and five columns. In a possible implementation, an addressing manner of the light source array may include, but is not limited to, point-based gating, column-based gating, row-based gating, region-of-interest (for example, a specific pattern or a specific sequence)-based gating, diagonal-based gating, or another possible gating manner. This is not limited in this application. To reduce optical crosstalk, an interval for addressing adjacent light sources in the light source array may be set to a relatively large value.

It may be understood that an addressing manner of the light source array is further related to a physical connection relationship of light sources in the light source array. For example, in a light source array, light sources on a same row are connected in series, and light sources in different rows are connected in parallel, and light sources may be addressed by row. For another example, in a light source array, light sources on a same column are connected in series, and different columns are connected in parallel, and light sources may be addressed by column. For still another example, light sources in a light source array are connected in parallel, and may be gated by point, by column, by row, by diagonal addressing, by region of interest, or in another possible manner. This is not listed one by one herein.

After light sources in the light source array are gated, a corresponding field of view may be scanned. For example, the transmitting module includes three light source modules, where one light source module corresponds to one light source array, one light source array corresponds to one scanning field of view, and one light source array corresponds to one maximum field of view. The three light source arrays are a light source array A, a light source array B, and a light source array C. The light source array A corresponds to a scanning field of view A, the light source array B corresponds to a scanning field of view B, and the light source array C corresponds to a scanning field of view C. It may also be understood that, after all light sources in the light source array A are gated, the scanning field of view A may be detected; after all light sources in the light source array B are gated, the scanning field of view B may be detected; and after all light sources in the light source array C are gated, the scanning field of view C may be detected.

For another example, the transmitting module may include three light source modules, where one light source module corresponds to one spot light source. The spot light source is used along with a scanning module (refer to the following related descriptions), so that the to-be-detected region may be scanned. The three spot light sources are a spot light source a, a spot light source b, and a spot light source c. The spot light source a corresponds to a scanning field of view a, the spot light source b corresponds to a scanning field of view b, and the light source c corresponds to a scanning field of view c. It should be noted that the spot light source may alternatively be a light source that is lit in the light source array. It may be understood that the spot light sources correspond to a same maximum field of view, and the maximum field of view is related to a reflective surface of the scanning module.

In a possible implementation, a wavelength range of an optical signal transmitted by a light source module may be from 850 nanometers (nm) to 1550 nm.

2. Scanning module

In a possible implementation, the scanning module may be configured to reflect, to the to-be-detected region, the optical signal transmitted by the transmitting module, and reflect, to the receiving module, an echo signal obtained by reflecting the optical signal by a target, to detect the to-be-detected region.

Generally, two-dimensional scanning needs to be performed on the to-be-detected region. The scanning module may be, for example, a two-dimensional (two-dimensional, 2D) scanner, or may be a combination of two one-dimensional (one-dimensional, 1D) scanners, so as to implement two-dimensional scanning on two-dimensional space (the to-be-detected region).

For example, the scanning module may be, for example, any one or a combination of a polyhedron reflector, a rotating mirror, a pendulum mirror, or a micro-electro-mechanical system MEMS reflector. The polyhedron reflector may include, for example, a tetrahedron reflector, a hexahedron reflector, a heptahedron reflector, and the like.

In a possible implementation, the two-dimensional scanner may be a combination of two one-dimensional scanners. For example, the two one-dimensional scanners are a heptahedron reflector and a reflector. Each time the heptahedron reflector rotates by an angle, the optical signal transmitted by the light source module may be reflected to the to-be-detected region, so that the to-be-detected region can be scanned in the horizontal direction. Each time a plane mirror rotates by an angle, the optical signal transmitted by the light source module may be reflected to the to-be-detected region, so that the to-be-detected region can be scanned in the vertical direction.

Further, optionally, the to-be-detected region may be scanned in the vertical direction after the scanning of the to-be-detected region in the horizontal direction is completed; or the to-be-detected region may be scanned in the horizontal direction after the scanning of the to-be-detected region in the vertical direction is completed; or scanning may be performed alternately in the horizontal direction and the vertical direction. This is not limited in this application.

In some embodiments, if the light source module is a light source array (as shown in FIG. 6), the to-be-detected region may be detected through electrical scanning. Specifically, physical parameters such as a voltage, a current, and a frequency may be regulated, to control projection of energy transmitted by the light source module to the to-be-detected region. For example, the to-be-detected region (that is, two-dimensional space) may be scanned by point, by row, by column, by region, or in another possible self-defined form.

In a possible implementation, the detection apparatus may further include a receiving module. Further, the detection apparatus may further include a control module. The receiving module and the control module are separately described in detail in the following.

3. Receiving module

The receiving module may include a detection module and an optical receiving module. The detection module may be, for example, a pixel array or another detector (such as a photodiode) that is applicable to the detection apparatus.

The pixel array may be represented as p × q, or it may be understood as that the pixel array may include p rows and q columns. Herein, p is an integer greater than 1, and q is a positive integer; or p is a positive integer, and q is an integer greater than 1. FIG. 7 is a schematic diagram of a structure of a pixel array according to this application. An example in which p × q = 5 × 5 is used for the pixel array. In other words, in this example, the pixel array has five rows and five columns. For example, pixels in the pixel array may include, for example, but are not limited to, a single-photon avalanche diode (single-photon avalanche diode, SPAD), a digital silicon photomultiplier (silicon photomultiplier, SiPM), or an avalanche photodiode (avalanche photodiode, APD).

In a possible implementation, a gating manner of the pixel array includes, but is not limited to, point-based gating, column-based gating, row-based gating, region of interest-based gating, diagonal-based gating, or another possible gating manner.

In a specific example, a manner of gating pixels in the pixel array is consistent with a manner of addressing light sources in the light source array. For example, if the light sources in the light source array are addressed by row, the pixels in the pixel array are also gated by row. Further, the sequence may be from the first row to the last row, or may be from the last row to the first row, or may be from a middle row to an edge row, or the like. This is not limited in this application. For another example, if the light sources in the light source array are addressed by column, the pixels in the pixel array are also gated by column. Further, the sequence may be from the first column to the last column, or may be from the last column to the first column, or may be from a middle column to an edge column, or the like. This is not limited in this application.

In a possible implementation, the optical receiving module is configured to receive an echo signal, and propagate the echo signal to the detection module. For example, the optical receiving module may include at least one optical lens. The optical lens may be a monolithic spherical lens, a monolithic aspheric lens, a combination of a plurality of spherical lenses (for example, a combination of concave lenses, a combination of convex lenses, or a combination of a convex lens and a concave lens), a combination of a plurality of aspheric lenses, or a combination of a spherical lens and an aspheric lens. A combination of a plurality of spherical lenses and/or an aspheric lens helps reduce aberration of an optical imaging system, so that imaging quality of the detection apparatus may be improved. It may be understood that the convex lens and the concave lens have a plurality of different types. For example, the convex lens may include, but is not limited to, a double convex lens, a flat convex lens, and a concave lens; and the concave lens may include, but is not limited to, a double concave lens, a flat concave lens, and a concave lens.

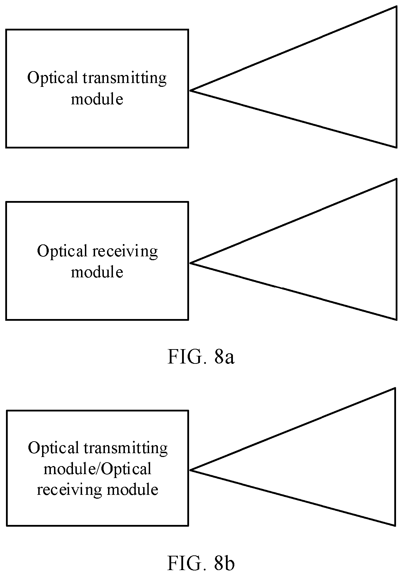

It should be noted that the optical receiving module and the foregoing optical transmitting module may be coaxial in reception and transmission (as shown in FIG. 8a), or may be abaxial in reception and transmission (as shown in FIG. 8b). For the optical receiving module and the optical transmitting module that are abaxial in reception and transmission, structures of the optical receiving module and the optical transmitting module may be the same. For the optical receiving module and the optical transmitting module that are coaxial in reception and transmission, a propagation path of an optical signal transmitted by the transmitting module is the same as a propagation path of an echo signal obtained by reflecting the optical signal by a target.

Further, one-to-one alignment of a transmitting field of view and a receiving field of view may be implemented based on an optical principle of focal plane imaging. Specifically, the optical receiving module and the optical transmitting module may be collectively referred to as an optical imaging system. A light source module may be located on an object focal plane of the optical imaging system, and a photosensitive surface of the detection module is located on an image focal plane of the optical imaging system. Based on this, the optical signal transmitted by the light source module is propagated to the to-be-detected region by using the optical imaging system, and the echo signal obtained by reflecting the optical signal by the target in the to-be-detected region may be imaged on the detection module of the image focal plane by using the optical imaging system.

4. Control module

In a possible implementation, the control module may be configured to generate a control signal based on the resolution requirement of the detection apparatus, and send the control signal to the transmitting module, to control the transmitting module to change the pointing direction of the at least one of the M scanning fields of view and/or the splicing manner of the M scanning fields of view, so as to meet the resolution requirement of the detection apparatus.

Further, optionally, the control module may be configured to obtain data of K frames of images, where K is a positive integer; determine at least one region of interest based on the data of the K frames of images; generate the control signal based on the at least one region of interest (for example, based on at least one of a position, a size, and a resolution requirement of the region of interest); and send the control signal to the transmitting module, to control the transmitting module to change the pointing direction of the at least one of the M scanning fields of view and/or the splicing manner of the M scanning fields of view.

For example, the control module may include one or more processing units. The processing unit may be a circuit having a signal (or data) processing capability. In an implementation, the processing unit may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processing unit may implement a specific function by using a logical relationship of a hardware circuit. The logical relationship of the hardware circuit is fixed or reconfigurable. For example, the processing unit is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processing unit loads a configuration document to implement hardware circuit configuration may be understood as a process in which the processing unit loads instructions to implement a function of the foregoing control module. In addition, the processing unit may also be an application processor (application processor, AP), an image signal processor (image signal processor, ISP), or another programmable logic device, a transistor logic device, a hardware component, or any combination thereof. Different processing units may be independent components, or may be integrated into one or more processors.

Based on the foregoing content, the following provides a specific implementation of the foregoing detection apparatus. In this way, the structure of the detection apparatus and a working process of the detection apparatus can be further understood. It should be noted that, in the foregoing modules, if no special description or logical conflict is provided, another possible detection apparatus may be formed based on an internal logical relationship of the modules. The following detection apparatus is merely an example.

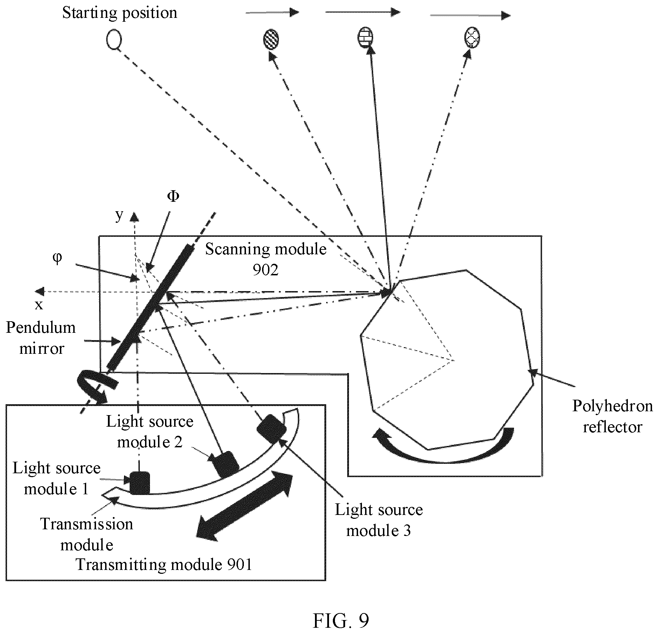

FIG. 9 is a schematic diagram of a structure of a detection apparatus according to this application. The detection apparatus includes a transmitting module 901 and a scanning module 902. For example, the transmitting module 901 includes three light source modules. The three light source modules are a light source module 1, a light source module 2, and a light source module 3. The three light source modules are located on a transmission module, and the three light source modules are located on a same horizontal plane. One light source module corresponds to one scanning field of view, and pointing directions of the three scanning fields of view may be flexibly adjusted based on a resolution requirement of the detection apparatus. An example in which the scanning module 902 includes a polyhedron reflector and a pendulum mirror is used. Each time the polyhedron reflector rotates by an angle, an optical signal transmitted by the light source module may be reflected to a position in a to-be-detected region, so that the to-be-detected region is scanned in a horizontal direction. Each time the pendulum mirror rotates by an angle, an optical signal transmitted by the light source module may be reflected to a position in the to-be-detected region, so that the to-be-detected region is scanned in a vertical direction. Further, optionally, the detection apparatus may further include a receiving module. For details, refer to the foregoing related descriptions. Details are not described herein again.

Based on the foregoing detection apparatus, because pointing directions of M scanning fields of view and a splicing manner of the M scanning fields of view are related to the resolution requirement of the detection apparatus, a resolution of the detection apparatus may be flexibly regulated by using a pointing direction of at least one of the M scanning fields of view and the splicing manner of the M scanning fields of view without changing parameters such as a rotation speed and an inclination angle of the scanning module, so that different resolution requirements of the detection apparatus can be met.

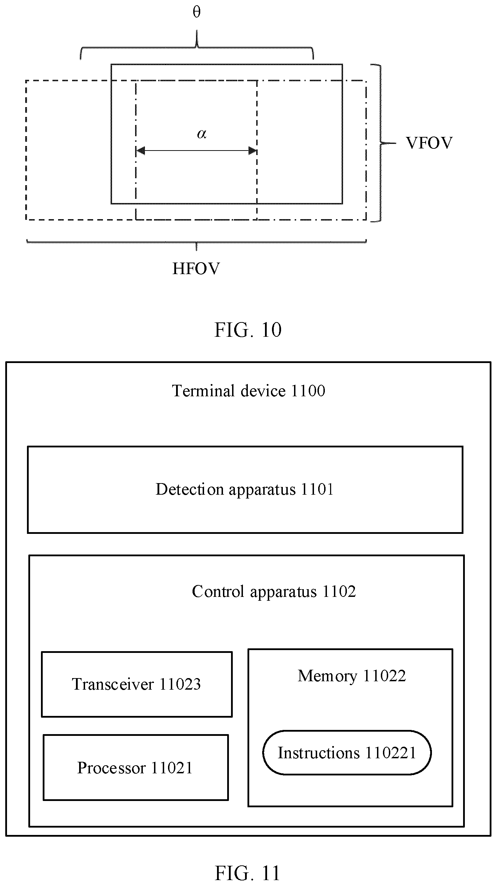

For example, a resolution requirement and a field-of-view requirement of a detection apparatus shown in FIG. 10 may be obtained by adjusting pointing directions of the three scanning fields of view. An included angle $\varphi$ between a pointing direction of a scanning field of view corresponding to the light source module 1 and a pointing direction of a scanning field of view corresponding to the light source module 2 meets the following Formula 1, and an included angle $\Phi$ between the pointing direction of the scanning field of view corresponding to the light source module 2 and a pointing direction of a scanning field of view corresponding to the light source module 3 meets the following Formula 2.

$$\varphi = 0.5 \times (\theta - \alpha) \qquad\qquad \text{Formula 1;}$$

and

$$\Phi = 0.5 \times (\text{HFOV} - \theta) \qquad\qquad \text{Formula 2}$$

$\alpha$ represents a field of view in which a 3x resolution is achieved through center overlapping, and a maximum scanning angle corresponding to a reflective surface of the scanning module, HFOV represents a horizontal field of view (horizontal field of view, HFOV), and VFOV represents a vertical field of view (vertical field of view, VFOV).

Based on the foregoing described architecture and function principles of the detection apparatus, this application may further provide a terminal device. FIG. 11 is a schematic diagram of a structure of a terminal device according to this application. The terminal device 1100 may include a detection apparatus 1101 in any one of the foregoing embodiments, and may further include a control apparatus 1102. The detection apparatus 1101 may send determined association information of a target to the control apparatus 1102. The control apparatus 1102 is configured to plan a driving route based on the received association information of the target, for example, avoiding obstacles on a driving path.

The detection apparatus 1101 may be, for example, a lidar, and may sense a target in a surrounding environment of the terminal device by using detection light. In some embodiments, in addition to sensing the target, the lidar may be further configured to sense a speed and/or a moving direction of the target. The detection apparatus 1101 may be the detection apparatus in any one of the foregoing embodiments. For details, refer to the foregoing related descriptions. Details are not described herein again.

Some or all functions of the terminal device 1100 are controlled by the control apparatus 1102. The control apparatus 1102 may include at least one processor 11021, and the processor 11021 executes instructions 110221 stored in a non-transitory computer-readable medium such as a memory 11022. Further, the terminal device may further include a transceiver 11023. For example, the transceiver 11023 may be configured to receive the association information of the target from the detection apparatus 1101. Alternatively, the control apparatus 1102 may be a plurality of computing devices that control individual components or subsystems of the terminal device 1100 in a distributed manner.

The processor 11021 may include one or more processing units. For description of the processing unit, refer to the descriptions of the processing unit in the control module. Details are not described herein again. Although FIG. 11 functionally illustrates the processor, the memory, and another component of the control apparatus 1102 in a same block, a person of ordinary skill in the art should understand that the processor and the memory may actually include a plurality of processors or memories that are not stored in a same physical housing. For example, the memory may be a hard disk drive, or another storage medium located in a housing different from that of the control apparatus 1102. For another example, the processor may alternatively be far away from the vehicle but may perform wireless communication with the vehicle.

In some embodiments, the memory 11022 may include the instructions 110221 (for example, program logic), and the instructions 110221 may be read by the processor 11021 to perform various functions of the terminal device 1100, including the foregoing described functions. The memory 11022 may also include additional instructions, including instructions for sending data to another system (for example, a propulsion system) of the terminal device, receiving data from the system, interacting with the system, and/or controlling the system. In addition to the instructions 110221, the memory 11022 may further store data, such as data detected by the detection apparatus 1101, a position, a direction, a speed, and other information of a vehicle.

For example, the memory 11022 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. In another example, the storage medium may alternatively be a component of the processor. The processor and the storage medium may be disposed in an ASIC. In addition, the ASIC may be located in the detection apparatus. Certainly, the processor and the storage medium may alternatively exist in the detection apparatus as discrete components.

It should be noted that the functional framework of the terminal device shown in FIG. 11 is merely an example. In another example, the terminal device 1100 may include more, fewer, or different apparatuses (or systems), and each apparatus may include more, fewer, or different components. In addition, the shown apparatuses and structure may be combined or split in any manner. This is not specifically limited in this application.

In a possible implementation, a plurality of applications may be installed on the terminal device, and different applications may correspond to the detection apparatus and be applied to different scenarios. For example, a first application is used as an example. After the first application is started in response to a user operation, the first application may send, to a control module in the detection apparatus, a resolution requirement of a scenario to which the detection apparatus is applied. The control module may generate a control signal based on the resolution requirement of the detection apparatus, and send the control signal to the transmitting module, to control the transmitting module to change a pointing direction of at least one of the M scanning fields of view and/or a splicing manner of the M scanning fields of view.

For example, the terminal device may be, for example, a transportation facility. The transportation facility may be, for example, a vehicle (for example, an unmanned vehicle, a smart vehicle, an electric vehicle, or a digital vehicle), a ship, a robot, a mapping device, an uncrewed aerial vehicle, a smart home device (for example, a robot vacuum cleaner), an intelligent manufacturing device (for example, an industrial device), an intelligent transportation device (for example, an automated guided vehicle (automated guided vehicle, AGV), an unmanned transport vehicle, or a truck). The AGV is a transport vehicle equipped with an automatic navigation apparatus such as an electromagnetic or optical device, capable of driving along a specified navigation path, and having security protection and various load transfer functions.

Based on the foregoing transport means, the splicing manner of the M scanning fields of view may be flexibly controlled, so that a resolution of the detection apparatus can be flexibly regulated. For example, a resolution of a region of interest can be improved. Therefore, the transport means is more applicable to a resolution requirement of the detection apparatus in an autonomous driving process.

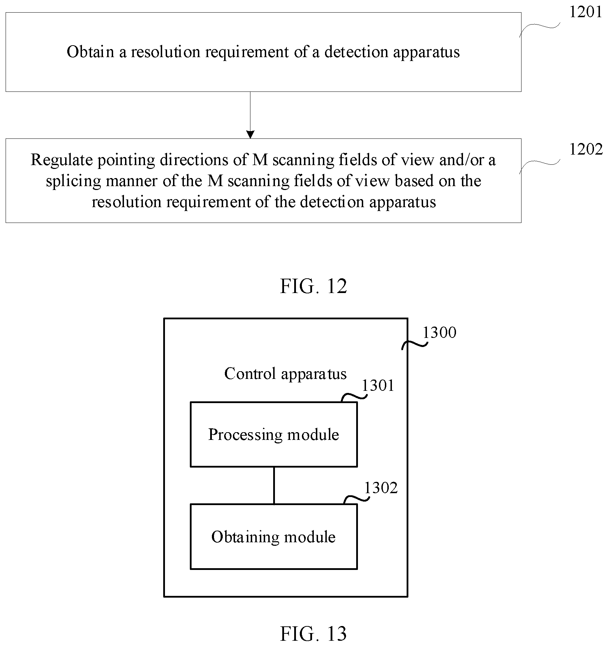

Based on the foregoing content and a same concept, this application provides a resolution control method. Refer to the description in FIG. 12. The resolution control method may be applied to the detection apparatus shown in any one of embodiments in FIG. 2 to FIG. 10. It may also be understood that the resolution control method may be implemented based on the detection apparatus shown in any one of the foregoing embodiments in FIG. 2 to FIG. 10. Alternatively, the detection control method may also be applied to the terminal device shown in FIG. 11. It may also be understood that the resolution control method may be implemented based on the terminal device shown in FIG. 11.

The resolution control method may be executed by a control apparatus. The control apparatus may belong to a detection apparatus, for example, may be a control module in the detection apparatus, or may be an apparatus independent of the detection apparatus, for example, a chip or a chip system. When the control apparatus belongs to a vehicle, the control apparatus may be a domain processor in the vehicle, or may be an electronic control unit (electronic control unit, ECU) in the vehicle, or the like.

FIG. 12 is a schematic flowchart of a resolution regulation method according to this application. The method includes the following steps.

Step 1201: Obtain a resolution requirement of a detection apparatus.

For the resolution requirement of the detection apparatus in step 1201, refer to the foregoing related descriptions. Details are not described herein again. For obtaining the resolution requirement of the detection apparatus, refer to the foregoing descriptions of Implementation A and Implementation B. Details are not described herein again.

Step 1202: Regulate pointing directions of M scanning fields of view and/or a splicing manner of the M scanning fields of view based on the resolution requirement of the detection apparatus.

In a possible implementation, a control signal may be generated based on the resolution requirement of the detection apparatus. Further, the control signal may be sent to a transmitting module, to control the transmitting module to regulate the pointing directions of the M scanning fields of view and/or the splicing manner of the M scanning fields of view.

It can be learned from step 1201 and step 1202 that different resolution requirements of the detection apparatus can be met by regulating the pointing directions of the M scanning fields of view and/or the splicing manner of the M scanning fields of view. It may be understood that regulating a resolution of the detection apparatus may also be understood as regulating a point cloud density or a point cloud topology.

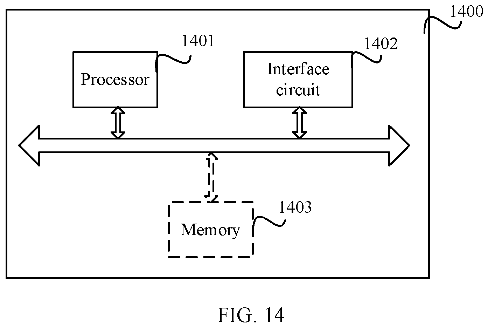

Based on the foregoing content and a same concept, FIG. 13 and FIG. 14 each are a schematic diagram of a possible structure of a control apparatus according to this application. The control apparatuses may be configured to implement the method in FIG. 12 in the foregoing method embodiment. Therefore, beneficial effects of the foregoing method embodiment can also be implemented. In this application, the control apparatus may be the control module in the foregoing detection system, or may be the processor in the terminal device in FIG. 11, or may be another independent control apparatus (for example, a chip).

As shown in FIG. 13, a control apparatus 1300 includes a processing module 1301 and an obtaining module 1302. The control apparatus 1300 is configured to implement the method in the method embodiment shown in FIG. 12.

When the control apparatus 1300 is configured to implement the method in the method embodiment shown in FIG. 12, the obtaining module 1302 is configured to obtain the resolution requirement of the detection apparatus; and the processing module 1301 is configured to regulate the pointing directions of the M scanning fields of view and/or the splicing manner of the M scanning fields of view based on the resolution requirement of the detection apparatus.

It should be understood that the processing module 1301 in this embodiment of this application may be implemented by a processor or a processor-related circuit component, and the obtaining module 1302 may be implemented by a related circuit component such as an interface circuit.

Based on the foregoing content and a same concept, as shown in FIG. 14, this application further provides a control apparatus 1400. The control apparatus 1400 may include a processor 1401 and an interface circuit 1402. The processor 1401 and the interface circuit 1402 are coupled to each other. It may be understood that the interface circuit 1402 may be an input/output interface. Optionally, the control apparatus 1400 may further include a memory 1403, configured to store a computer program, instructions, or the like executed by the processor 1401.

When the control apparatus 1400 is configured to implement the method shown in FIG. 12, the processor 1401 is configured to perform a function of the processing module 1301, and the interface circuit 1402 is configured to perform a function of the obtaining module 1302.

Based on the foregoing content and a same concept, this application provides a chip. The chip may include a processor and an interface circuit. Further, optionally, the chip may further include a memory. The processor is configured to execute a computer program or instructions stored in the memory, so that the chip performs the method according to any possible implementation in FIG. 12.

The method steps in embodiments of this application may be implemented in a hardware manner, or may be implemented in a manner of executing software instructions by the processor. The software instructions may include a corresponding software module, and the software module may be stored in the memory. For the memory, refer to the foregoing descriptions of the memory 11022. Details are not described herein again.

A part or all of the foregoing embodiments may be implemented through software, hardware, firmware, or any combination thereof. When the software is used to implement embodiments, all or a part of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "uniformity" does not mean absolute uniformity, and an engineering error may be allowed. "Vertical" does not mean absolute verticality, and an engineering error may be allowed. "Horizontal" does not mean absolute horizontality, and an engineering error may be allowed. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between associated objects. In the formula of this application, the character "/" indicates a "division" relationship between associated objects. In addition, the word "example" in this application is used to represent giving an example, an illustration, or a description. Any embodiment or design solution described as an "example" in this application should not be explained as being more preferred or having more advantages than another embodiment or design solution. Alternatively, it may be understood that the word "example" is used to present a concept in a specific manner, and does not constitute a limitation on this application.

It may be understood that various numbers in this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to them without departing from the scope of this application. Correspondingly, this specification and accompanying drawings are merely examples for description of the solutions defined by the appended claims, and are considered as any of or all modifications, variations, combinations or equivalents that cover the scope of this application.

**Claims**

1.  A detection apparatus, comprising a transmitting module, wherein the transmitting module corresponds to M scanning fields of view, and M is an integer greater than 1; and
    pointing directions of the M scanning fields of view and a splicing manner of the M scanning fields of view are related to a resolution requirement of the detection apparatus.

2.  The apparatus according to claim 1, wherein the transmitting module is specifically configured to:
    change a pointing direction of at least one of the M scanning fields of view and/or the splicing manner of the M scanning fields of view, to adjust a resolution of the detection apparatus.

3.  The apparatus according to claim 2, wherein the transmitting module comprises M light source modules, and one light source module corresponds to one scanning field of view; and

the transmitting module is specifically configured to:

change a position of at least one of the M light source modules, to change the pointing direction of the at least one of the M scanning fields of view and/or change the splicing manner of the M scanning fields of view.

4.  The apparatus according to claim 3, wherein the M light source modules are located on a same horizontal plane, or the M light source modules are located on different horizontal planes.

5.  The apparatus according to claim 2, wherein the transmitting module comprises H light source modules and the Q optical splitting modules, a combination of the H light source modules and the Q optical splitting modules corresponds to the M scanning fields of view, and H and Q are positive integers; and

the transmitting module is specifically configured to:

change a position of at least one of the H light source modules, and/or change a turn-on time point and/or a turn-off time point of at least one of propagation optical paths corresponding to the M scanning fields of view, to change the pointing direction of the at least one of the M scanning fields of view and/or change the splicing manner of the M scanning fields of view.

6.  The apparatus according to any one of claims 2 to 5, wherein the transmitting module further comprises a transmission module; and

the transmission module is configured to change, as driven by a driving element, a position of at least one of the light source modules comprised in the transmitting module.

7.  The apparatus according to any one of claims 1 to 6, wherein the splicing manner of the M scanning fields of view comprises any one or a combination of the following two:

    splicing in a horizontal direction; or
    splicing in a vertical direction.

8.  The apparatus according to any one of claims 1 to 7, wherein a full field-of-view range of the detection apparatus comprises at least one region of interest; and

the resolution requirement of the detection apparatus is related to at least one of a position, a size, and a resolution requirement of the region of interest.

9.  The apparatus according to any one of claims 1 to 8, wherein the resolution requirement of the detection apparatus is related to an application scenario of the detection apparatus.

10. The apparatus according to any one of claims 1 to 9, wherein the detection apparatus further comprises a scanning module; and

the scanning module is configured to reflect, to a to-be-detected region, an optical signal transmitted by the transmitting module, and reflect, to a receiving module, an echo signal obtained by reflecting the optical signal by a target in the to-be-detected region.

11. The apparatus according to claim 10, wherein the scanning module comprises at least one of a polyhedron reflector, a rotating mirror, a pendulum mirror, and a micro-electro-mechanical system MEMS reflector.

12. The apparatus according to any one of claims 1 to 11, wherein the detection apparatus further comprises a control module; and

the control module is configured to generate a control signal based on the resolution requirement of the detection apparatus, and send the control signal to the transmitting module, wherein the control signal is used to control the transmitting module to change the pointing direction of the at least one of the M scanning fields of view and/or the splicing manner of the M scanning fields of view.

13. The apparatus according to claim 12, wherein the control module is specifically configured to:

obtain data of K frames of images, determine at least one region of interest based on the data of the K frames of images, generate the control signal based on the at least one region of interest, and send the control signal to the transmitting module, wherein the control signal is used to control the transmitting module to change the pointing direction of the at least one of the M scanning fields of view and/or the splicing manner of the M scanning fields of view, and K is a positive integer.

14. A terminal device, comprising a processor and the detection apparatus according to any one of claims 1 to 13, wherein the processor is configured to process association information of a target obtained by the detection apparatus; or configured to determine the association information of the target based on an echo signal received by the detection apparatus.

15. A resolution regulation method, applied to a detection apparatus, wherein the detection apparatus comprises a transmitting module, the transmitting module corresponds to M scanning fields of view, and M is an integer greater than 1; and the method comprises:

   obtaining a resolution requirement of the detection apparatus; and
   regulating pointing directions of the M scanning fields of view and/or a splicing manner of the M scanning fields of view based on the resolution requirement of the detection apparatus.

16. The method according to claim 15, wherein the regulating pointing directions of the M scanning fields of view and/or a splicing manner of the M scanning fields of view based on the resolution requirement of the detection apparatus comprises:

   generating a control signal based on the resolution requirement of the detection apparatus; and
   sending the control signal to the transmitting module, wherein the control signal is used to control the transmitting module to change a pointing direction of at least one of the M scanning fields of view and/or the splicing manner of the M scanning fields of view.

17. The method according to claim 16, wherein the generating a control signal based on the resolution requirement of the detection apparatus comprises:

   obtaining data of K frames of images, wherein K is a positive integer;
   determining at least one region of interest based on the data of the K frames of images; and
   generating the control signal based on the at least one region of interest.

Detection apparatus

FIG. 1a

FIG. 1b

FIG. 2

Region corresponding to a full field-of-view range of a detection apparatus

Region corresponding to a scanning field of view 1

Region corresponding to a scanning field of view 2

Region corresponding to a scanning field of view 3

Region corresponding to a scanning field of view 4

FIG. 3

Region corresponding
to a scanning field of
view 1

Region
corresponding to a
scanning field of
view 2

Region
corresponding to a
scanning field of
view 3

Region
corresponding to a
scanning field of
view 4

1x

2x

3x

4x

3x

2x

1x

FIG. 4a

Region corresponding
to a scanning field of
view 1

Region
corresponding to a
scanning field of
view 2

Region
corresponding to
a scanning field
of view 3

Region
corresponding to a
scanning field of
view 4

2x

FIG. 4b

Region corresponding to a
scanning field of view 1

Region corresponding to a
scanning field of view 2

| 1x | 2x | 1x |
| 2x | 4x | 2x |
| 1x | 2x | 1x |

Region corresponding to a
scanning field of view 3

Region corresponding to a
scanning field of view 4

FIG. 4c

Region corresponding to a
scanning field of view 1

Region corresponding to
a scanning field of view 2

Region
corresponding to a
scanning field of
view 3

| 1x | 3x | 1x |

FIG. 4d

Region corresponding to a
scanning field of view 1

Region corresponding to a
scanning field of view 2

| 1x | 2x | 2x | 1x |

Region corresponding to a
scanning field of view 3

FIG. 4e

EP 4 465 078 A1

Region corresponding to a scanning field of view 1

Region corresponding to a scanning field of view 3

Region corresponding to a scanning field of view 4

Region corresponding to a scanning field of view 2

FIG. 4f

27

Light source module

Vertical
direction

Horizontal direction

FIG. 5a

Light source
module

Vertical
direction

Horizontal
direction

FIG. 5b

Light source array

1  2  3  4  5

1

2

3

4

5

Light source

FIG. 6

Pixel array

1  2  3  4  5

1

2

3

4

5

Pixel

FIG. 7

Optical transmitting module

Optical receiving module

FIG. 8a

Optical transmitting module/Optical receiving module

FIG. 8b

Starting position

Φ

y

φ

x

Scanning module
902

Pendulum
mirror

Polyhedron
reflector

Light source
module 2

Light source
module 1

Light source
module 3

Transmission
module

Transmitting module 901

FIG. 9

FIG. 10

FIG. 11

Obtain a resolution requirement of a detection apparatus 1201

Regulate pointing directions of M scanning fields of view and/or a splicing manner of the M scanning fields of view based on the resolution requirement of the detection apparatus 1202

FIG. 12

Control apparatus 1300

Processing module 1301

Obtaining module 1302

FIG. 13

1400

1401

Processor

1402

Interface
circuit

1403

Memory

FIG. 14

## INTERNATIONAL SEARCH REPORT

| International application No. |
| --- |
| **PCT/CN2022/076378** |

**A. CLASSIFICATION OF SUBJECT MATTER**

G01S 7/481(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNTXT; VEN; WOTXT; USTXT; EPTXT; CNKI: 分辨率, 需求, 探测, 范围, 视场, 拼接, 扫描, 可调, 调整, resolution, require+, detect+, range, visual field, split+, scan+, tunable, adjust+

**C. DOCUMENTS CONSIDERED TO BE RELEVANT**

| Category* | Citation of document, with indication, where appropriate, of the relevant passages | Relevant to claim No. |
| --- | --- | --- |
| X | CN 112616318 A (SUTENG INNOVATION TECHNOLOGY CO., LTD.) 06 April 2021 (2021-04-06)<br>    description, paragraphs 0061-0096, and figures 1a-13 | 1-17 |
| A | CN 109782254 A (HESAI PHOTONICS TECHNOLOGY CO., LTD.) 21 May 2019 (2019-05-21)<br>    entire document | 1-17 |
| A | CN 113075642 A (NINGBO SUNNY AUTOMOTIVE OPTECH CO., LTD.) 06 July 2021 (2021-07-06)<br>    entire document | 1-17 |
| A | CN 113167897 A (SUTENG INNOVATION TECHNOLOGY CO., LTD.) 23 July 2021 (2021-07-23)<br>    entire document | 1-17 |
| A | US 2014313316 A1 (SEESCAN, INC.) 23 October 2014 (2014-10-23)<br>    entire document | 1-17 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 March 2022** | **29 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/076378**

| Patent document cited in search report | | | Publication date (day/month/year) | Patent family member(s) | | | Publication date (day/month/year) |
|---|---|---|---|---|---|---|---|
| CN | 112616318 | A | 06 April 2021 | WO | 2021051722 | A1 | 25 March 2021 |
| CN | 109782254 | A | 21 May 2019 | WO | 2020156310 | A1 | 06 August 2020 |
| CN | 113075642 | A | 06 July 2021 | CN | 113075680 | A | 06 July 2021 |
| | | | | WO | 2021139834 | A1 | 15 July 2021 |
| CN | 113167897 | A | 23 July 2021 | WO | 2021196194 | A1 | 07 October 2021 |
| US | 2014313316 | A1 | 23 October 2014 | | None | | |

Form PCT/ISA/210 (patent family annex) (January 2015)